# EUROPÄISCHE PATENTSCHRIFT

(11) **EP 3 811 501 B1**
(45) Veröffentlichungstag und Bekanntmachung des Hinweises auf die Patenterteilung: **29.04.2026**
(21) Anmeldenummer: 19728693.3
(22) Anmeldetag: 05.06.2019
(51) Int. Cl.: H02K 7/07, F16D 63/00, B60N 2/22, B60N 2/02

(54) **ANTRIEBSVORRICHTUNG, SITZVERSTELLUNGSVORRICHTUNG UND VERFAHREN ZUM VERSTELLEN EINES BEWEGBAREN BAUTEILS EINES KRAFTFAHRZEUGS**
DRIVE DEVICE, SEAT-ADJUSTMENT DEVICE AND METHOD FOR ADJUSTING A MOVABLE COMPONENT OF A MOTOR VEHICLE
DISPOSITIF D'ENTRAÎNEMENT, DISPOSITIF DE RÉGLAGE D'UN SIÈGE ET PROCÉDÉ DE RÉGLAGE D'UN ÉLÉMENT MOBILE D'UN VÉHICULE AUTOMOBILE

(30) Priorität: 22.06.2018 DE 102018210167
(43) Veröffentlichungstag der Anmeldung: 28.04.2021
(73) Patentinhaber: HS Products Engineering GmbH, 82216 Maisach (DE)
(72) Erfinder: SPECHT, Martin, 82213 Maisach (DE)
(74) Vertreter: Wietzke, Andreas
(86) Internationale Anmeldenummer: PCT/EP2019/064729
(87) Internationale Veröffentlichungsnummer: WO 2019/243062

(56) Entgegenhaltungen:
- DE-A1- 10 236 372
- DE-A1- 4 318 481
- JP-A- 2014 091 375
- JP-U- S5 426 018
- US-A1- 2003 213 087
- US-A1- 2018 141 525

## Beschreibung

Die vorliegende Erfindung betrifft eine Antriebsvorrichtung für den Antrieb bewegbarer Bauteile eines Kraftfahrzeugs. Ferner betrifft die Erfindung eine Sitzverstellungsvorrichtung für einen Fahrzeugsitz eines Kraftfahrzeugs sowie ein Verfahren zum Verstellen eines bewegbaren Bauteils eines Kraftfahrzeugs.

Kraftfahrzeuge weisen eine Vielzahl bewegbarer Bauteile auf, um beispielsweise Öffnungen am Kraftfahrzeug, wie z. B. an einem Handschuhfach, Kofferraum oder dergleichen, zu verschließen bzw. freizugeben oder das Kraftfahrzeug, insbesondere einen Fahrzeugsitz, Rückspiegel, Seitenspiegel, Lenkrad oder dergleichen, an eine Körpergröße bzw. persönliche Präferenzen eines Insassen des Kraftfahrzeugs anzupassen.

Es sind beispielsweise Fahrzeugsitze mit einer elektrisch verstellbaren Rückenlehne bekannt, wobei eine Neigung der Rückenlehne mittels einer elektrischen Antriebsvorrichtung verstellbar ist. Bekannte hierfür verwendete Antriebsvorrichtungen weisen einen Elektromotor und ein daran angeordnetes Getriebe auf. Das Getriebe ist ausgebildet, eine Drehzahl des Elektromotors in eine geringere Drehzahl zu übersetzen. Auf diese Weise ist gewährleistet, dass auch bei einer relativ hohen Motordrehzahl des Elektromotors eine langsame sowie sanfte Verstellung des Neigungswinkels erfolgen kann. Zudem hat ein derartiges Getriebe den Vorteil, dass dieses im Zusammenspiel mit dem Elektromotor einem manuellen Verstellen der Neigung der Rückenlehne ein besonders hohes Haltemoment entgegensetzt, sodass eine derartige Sitzverstellung zur Gewährleistung einer festen Sitzeinstellung keine zusätzliche Feststellvorrichtung zum Fixieren des Neigungswinkels des Fahrzeugsitzes erforderlich ist.

Aus den Dokumenten US 2003/213087 A1, JP S54 26018 U, JP 2014-91375 A, US 2018 141 525 A1, DE 102 36 372 A1 und DE 43 18 481 A1 sind verschiedene elektrische Antriebsvorrichtungen sowie Feststellvorrichtungen bekannt.

Derartige Fahrzeugsitze haben den Nachteil, dass die Antriebsvorrichtungen aufgrund der Ausbildung des Elektromotors sowie des erforderlichen Getriebes einen relativ großen Bauraumbedarf aufweisen. Zudem weisen derartige Antriebsvorrichtungen einen relativ hohen Verschleiß auf und sind verhältnismäßig teuer in der Herstellung.

Es ist daher Aufgabe der vorliegenden Erfindung, die voranstehend beschriebenen Nachteile bei einer Antriebsvorrichtung für den Antrieb bewegbarer Bauteile eines Kraftfahrzeugs, einer Sitzverstellungsvorrichtung für einen Fahrzeugsitz eines Kraftfahrzeugs sowie einem Verfahren zum Verstellen eines bewegbaren Bauteils eines Kraftfahrzeugs zu beheben oder zumindest teilweise zu beheben. Insbesondere ist es die Aufgabe der vorliegenden Erfindung, eine Antriebsvorrichtung, eine Sitzverstellungsvorrichtung und ein Verfahren zu schaffen, die auf eine einfache und kostengünstige Art und Weise einen reduzierten Bauraum benötigen und/oder einen reduzierten Verschleiß aufweisen.

Voranstehende Aufgabe wird durch eine Antriebsvorrichtung für den Antrieb bewegbarer Bauteile eines Kraftfahrzeugs mit den Merkmalen des unabhängigen Anspruchs 1, eine Sitzverstellungsvorrichtung für einen Fahrzeugsitz eines Kraftfahrzeugs mit den Merkmalen des nebengeordneten Anspruchs 12 sowie durch ein Verfahren zum Verstellen eines bewegbaren Bauteils eines Kraftfahrzeugs mit den Merkmalen des nebengeordneten Anspruchs 13 gelöst. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Antriebsvorrichtung beschrieben sind, selbstverständlich auch im Zusammenhang mit der erfindungsgemäßen Sitzverstellungsvorrichtung sowie dem erfindungsgemäßen Verfahren und jeweils umgekehrt, sodass bezüglich der Offenbarung zu den einzelnen Erfindungsaspekten stets wechselseitig Bezug genommen wird beziehungsweise werden kann.

Gemäß dem ersten Aspekt der Erfindung wird die Aufgabe durch eine Antriebsvorrichtung für den Antrieb bewegbarer Bauteile eines Kraftfahrzeugs, insbesondere eine Sitzverstellung eines Fahrzeugsitzes, gelöst. Die Antriebsvorrichtung weist einen Elektroflachmotor mit einem Stator und einem um eine Rotationsachse rotierbar gelagerten Scheibenläufer auf. Erfindungsgemäß weist die Antriebsvorrichtung eine zum Feststellen des Scheibenläufers ausgebildete Feststellvorrichtung auf, wobei die Feststellvorrichtung ein zwischen einer Halteposition und einer Freigabeposition bewegbar gelagertes Feststellelement, eine betätigbare Aktuatorvorrichtung mit einem bewegbar gelagerten Aktuatorelement zum Bewegen des Feststellelements von der Halteposition in die Freigabeposition und eine Rückstellvorrichtung zum Zurückstellen des Feststellelements von der Freigabeposition in die Halteposition aufweist. In der Halteposition steht das Feststellelement mit einem Feststellabschnitt des Scheibenläufers mechanisch im Eingriff. Ferner ist das Feststellelement um eine Schwenkachse verschwenkbar an dem Elektroflachmotor angeordnet. Der Feststellabschnitt ist an einer rotationsfest am Scheibenläufer gehaltenen Haltescheibe ausgebildet. Weiter ist die Rückstellvorrichtung zwischen der Schwenkachse und der Aktuatorvorrichtung angeordnet.

Der Elektroflachmotor zeichnet sich dadurch aus, dass dieser im Verhältnis zu seiner Breite und Höhe eine relativ geringe Dicke aufweist. Der Elektroflachmotor weist beispielsweise einen plattenförmig bzw. scheibenförmig ausgebildeten Stator sowie einen plattenförmig bzw. scheibenförmig ausgebildeten Scheibenläufer mit zwei entgegengesetzten Hauptseiten auf, wobei der Stator vorzugsweise die Hauptseiten des Scheibenläufers abdeckt bzw. zumindest im Wesentlichen abdeckt. Vorzugsweise weist der Elektroflachmotor ein Gehäuse auf, welches den Scheibenläufer vor äußeren Einflüssen, wie z.B. Feuchtigkeit, Staub oder dergleichen, schützt. Es kann im Rahmen der Erfindung vorgesehen sein, dass der Stator und/oder ein Statorrückschluss des Elektroflachmotors das Gehäuse oder zumindest einen Teil des Gehäuses bildet. Der Scheibenläufer ist um die Rotationsachse rotierbar bzw. drehbar gelagert, um somit ein Drehmoment zum Bewegen eines bewegbaren Bauteils des Kraftfahrzeugs bereitzustellen.

Die Feststellvorrichtung ist zumindest teilweise mit dem Scheibenläufer mechanisch gekoppelt oder mit dem Scheibenläufer zumindest mechanisch koppelbar. Hierfür weist die Feststellvorrichtung das bewegbar gelagerte Feststellelement auf. Das Feststellelement ist zwischen der Halteposition, in welcher ein Drehen des Scheibenläufers blockiert oder zumindest stark behindert ist, und der Freigabeposition, in welcher das Drehen des Scheibenläufers freigegeben ist, bewegbar, beispielsweise linear entlang einer Achse oder durch Verschwenken um eine Schwenkachse. In der Halteposition steht das Feststellelement mit dem Feststellabschnitt des Scheibenläufers mechanisch im Eingriff und blockiert oder behindert somit die Rotation des Scheibenläufers. Unter einer starken Behinderung des Drehens wird im Rahmen der Erfindung verstanden, dass das Haltemoment der Antriebsvorrichtung eine derartige Größe aufweist, dass beim bestimmungsgemäßen Gebrauch der Antriebsvorrichtung dieses nicht überwindbar ist. Dies bedeutet beispielsweise bei einer Sitzverstellung, dass in der Halteposition ein Verstellen des Fahrzeugsitzes durch manuelles Belasten des Fahrzeugsitzes durch den Anwender nicht oder nur unter enormem Kraftaufwand möglich ist.

Die Aktuatorvorrichtung ist zum Bewegen des Feststellelements von der Halteposition in die Freigabeposition ausgebildet. Hierfür weist die Aktuatorvorrichtung das Aktuatorelement auf, welches vorzugsweise mit dem Feststellelement mechanisch gekoppelt oder zumindest mechanisch koppelbar ist. Vorzugsweise ist die Aktuatorvorrichtung mittels eines Arbeitsmediums, insbesondere elektrischen Stroms, betreibbar. Durch Beaufschlagen der Aktuatorvorrichtung mit dem Arbeitsmedium ist das Aktuatorelement derart bewegbar, dass dieses das Feststellelement von der Halteposition in die Freigabeposition bewegt, beispielsweise in die Freigabeposition zieht, drückt oder dergleichen. Zudem ist die Aktuatorvorrichtung vorzugsweise derart ausgebildet, dass bei einem Nicht-Beaufschlagen der Aktuatorvorrichtung mit dem Arbeitsmedium ein Bewegen des Feststellelements in die Halteposition mit relativ geringen Kräften gewährleistet ist. Hierdurch wird gewährleistet, dass ein Rückstellen der Feststellvorrichtung von der Freigabeposition in die Halteposition bei nicht beaufschlagter Aktuatorvorrichtung nicht oder nur geringfügig behindert ist. Im Falle einer Störung der Beaufschlagung mit dem Arbeitsmedium ist somit eine Rückstellung des Feststellelements in die Halteposition stets leicht möglich. Zusätzlich oder alternativ kann das Aktuatorelement der Aktuatorvorrichtung erfindungsgemäß ausgebildet sein, durch Ansteuern des Elektroflachmotors in die Freigabeposition bewegt zu werden. Hierfür weist das Aktuatorelement und/oder der Scheibenläufer vorzugsweise einen keilförmigen bzw. schrägen Bereich auf. Weiter bevorzugt weist die Aktuatorvorrichtung eine Federvorrichtung zum Bewegen des Aktuatorelements in Richtung der Halteposition auf.

Zum Zurückstellen des Feststellelements von der Freigabeposition in die Halteposition weist die Antriebsvorrichtung die Rückstellvorrichtung auf. Die Rückstellvorrichtung ist vorzugsweise als passives Bauteil ausgebildet. Demnach ist die Rückstellvorrichtung vorzugsweise ausgebildet, durch das Bewegen des Feststellelements von der Halteposition in die Freigabeposition Energie zu speichern und diese gespeicherte Energie wieder abzugeben, wenn die Aktuatorvorrichtung nicht mehr mit dem Arbeitsmedium beaufschlagt wird. Vorzugsweise weist die Rückstellvorrichtung ein Federelement, wie z. B. eine Schraubenfeder, Blattfeder oder dergleichen, auf. Es kann erfindungsgemäß vorgesehen sein, dass die Rückstellvorrichtung als Teil der Aktuatorvorrichtung ausgebildet ist.

Das Feststellelement ist um die Schwenkachse verschwenkbar an dem Elektroflachmotor angeordnet. Die Schwenkachse verläuft vorzugsweise parallel zur Rotationsachse des Scheibenläufers. Ein derartiges Feststellelement ist vorzugsweise klinkenförmig, insbesondere rastklinkenförmig, ausgebildet.

Eine erfindungsgemäße Antriebsvorrichtung für den Antrieb bewegbarer Bauteile eines Kraftfahrzeugs hat gegenüber herkömmlichen Antriebsvorrichtungen den Vorteil, dass mit einfachen Mitteln sowie auf eine kostengünstige Art und Weise eine Bewegung bewegbarer Teile des Kraftfahrzeugs gewährleistet ist, wobei die Antriebsvorrichtung besonders platzsparend ausgebildet ist und einen relativ geringen Verschleiß aufweist. Die Herstellungskosten einer erfindungsgemäßen Antriebsvorrichtung sind geringer als bei einer bekannten Antriebsvorrichtung mit einem Elektromotor und einem Getriebe. Zudem ist eine Kraftübertragung zwischen dem Feststellelement und dem Feststellabschnitt zur Bereitstellung des Haltemoments verbesserbar, da sich das Feststellelement im Wesentlichen tangential zum Feststellabschnitt erstreckt und somit einer relativ geringen mechanischen Belastung ausgesetzt ist.

Der Feststellabschnitt ist an einer rotationsfest am Scheibenläufer gehaltenen Haltescheibe ausgebildet. Die Haltescheibe ist vorzugsweise an einer Außenseite des Stators bzw. eines Statorrückschlusses des Elektroflachmotors angeordnet. Demnach bewirkt eine Rotation des Scheibenläufers eine entsprechende Rotation der Haltescheibe. Es kann dabei vorgesehen sein, dass die Haltescheibe einteilig bzw. monolithisch mit dem Scheibenläufer ausgebildet ist. In der Freigabeposition ist eine derartige Rotation freigegeben, in der Halteposition ist die Rotation durch das mit der Haltescheibe mechanisch in Eingriff stehende Feststellelement blockiert oder zumindest stark gehemmt. Ein derartiger Feststellabschnitt ist mit einfachen Mitteln sowie kostengünstig herstellbar. Zudem ist mittels einer Haltescheibe ein Abstand zwischen der Kraftübertragung von Feststellelement und Haltescheibe zur Rotationsachse des Scheibenläufers vergrößerbar, sodass zum Bereitstellen eines vorgegebenen Haltemoments erforderliche Kräfte verringerbar sind.

Die Rückstellvorrichtung ist zwischen der Schwenkachse und der Aktuatorvorrichtung angeordnet. Vorzugsweise ist die Rückstellvorrichtung mechanisch mit dem Feststelleelement gekoppelt. Weiter bevorzugt ist die Rückstellvorrichtung näher an der Aktuatorvorrichtung als an der Schwenkachse angeordnet. Eine derartige Anordnung hat den Vorteil, dass mit einfachen Mitteln sowie kostengünstig ein Vorspannen der Rückstellvorrichtung mittels der Aktuatorvorrichtung beim Bewegen des Feststellelements von der Freigabeposition in die Halteposition mit einfachen Mitteln sowie kostengünstig gewährleistet ist.

Vorzugsweise ist der Feststellabschnitt an einer Umfangsfläche der Haltescheibe ausgebildet. Alternativ kann der Feststellabschnitt an einer Seitenfläche oder beiden Seitenflächen der Haltescheibe ausgebildet sein. Ein an der Umfangsfläche ausgebildeter Feststellabschnitt hat den Vorteil, dass ein Abstand zwischen der Kraftübertragung von Feststellelement und Haltescheibe zur Rotationsachse des Scheibenläufers vergrößert ist, sodass zum Bereitstellen eines vorgegebenen Haltemoments erforderliche Kräfte verringert sind.

Es ist erfindungsgemäß bevorzugt, dass der Feststellabschnitt und das Feststellelement jeweils eine Reibfläche aufweisen. Unter einer Reibfläche wird im Rahmen der Erfindung eine Fläche mit einem erhöhten Reibkoeffizienten verstanden, sodass durch Anpressen des Feststellelements an den Feststellabschnitt eine quer hierzu ausgerichtete Reibkraft zum Erzeugen des Haltemoments an der Haltescheibe bewirkbar ist. Vorzugsweise sind der Feststellabschnitt und das Feststellelement gemäß einer Reibkupplung, wie z. B. einer Lamellenkupplung oder dergleichen, ausgebildet. Reibflächen haben den Vorteil, dass diese mit einfachen Mitteln sowie kostengünstig herstellbar sind. Zudem haben Reibflächen den Vorteil, dass das Feststellelement unabhängig von einer relativen Lage des Scheibenläufers mit dem Feststellabschnitt in Eingriff bringbar ist.

Gemäß einer bevorzugten alternativen Ausführungsform der Erfindung kann bei einer Antriebsvorrichtung vorgesehen sein, dass der Feststellabschnitt eine Verzahnung mit einer Mehrzahl von Haltezähnen aufweist, wobei zwischen zwei benachbarten Haltezähnen ein Freibereich ausgebildet ist, und wobei das Feststellelement einen Feststellzahn aufweist, wobei der Feststellzahn ausgebildet ist, in der Halteposition in den Freibereich einzugreifen. Die Haltezähne sind vorzugsweise gleichmäßig über den Feststellabschnitt verteilt und weisen vorzugsweise alle denselben Abstand zur Rotationsachse des Scheibenläufers auf. Vorzugsweise erstrecken sich die Haltezähne in radialer Richtung von der Rotationsachse des Scheibenläufers weg. Weiter bevorzugt weisen die Haltezähne die gleiche Form und Größe auf. Die zwischen den Haltezähnen ausgebildeten Freibereiche weisen vorzugsweise ebenfalls die gleiche Form und Größe auf. Die Haltezähne sind vorzugsweise zur Aufnahme einer tangential zum Scheibenläufer gerichteten Kraft ausgebildet. Der Feststellzahn weist vorzugsweise eine Form und Grüße auf, welche mit der Form und Größe der Freibereiche korrespondiert, vorzugsweise derart, dass der Feststellzahn in der Halteposition formschlüssig in einen Freibereich eingreift. Dies hat den Vorteil, dass eine Kraftübertragung zwischen dem Feststellelement und dem Feststellabschnitt durch Formschluss gewährleistet ist. Auf diese Weise sind mit einfachen Mitteln sowie kostengünstig besonders hohe Haltemomente bereitstellbar.

Vorzugsweise weisen die Haltezähne mit dem Feststellzahn in Eingriff bringbare Haltezahnflanken auf, wobei sich benachbarte Haltezahnflanken benachbarter Haltezähne parallel oder zumindest im Wesentlichen parallel zueinander erstrecken. Weiter bevorzugt erstrecken sich die Haltezahnflanken parallel zu einer Geraden, welche durch eine Mitte des zwischen den Haltezähnen ausgebildeten Freibereichs in radialer Richtung des Feststellabschnitts verläuft. Derartige Haltezähne haben den Vorteil, dass die Haltezahnflanken quer bzw. zumindest im Wesentlichen quer zur Tangentialrichtung des Feststellabschnitts ausgebildet sind, sodass bei der Bereitstellung des Haltemoments keine oder nur eine verhältnismäßig geringe radiale Kraftkomponente zwischen dem Feststellzahn und dem Haltezahn wirkt. Ein Herausdrücken des Feststellzahns aus dem Freibereich aufgrund einer zu hohen radialen Kraftkomponente, welche der Aktuatorvorrichtung entgegen wirkt, ist somit mit einfachen Mitteln sowie kostengünstig verhinderbar. Hierdurch ist ein unbeabsichtigtes Bewegen des Feststellelements aus der Halteposition in die Freigabeposition verhinderbar.

Gemäß einer bevorzugten Weiterbildung der Erfindung kann bei einer Antriebsvorrichtung vorgesehen sein, dass die Haltezähne und/oder der Feststellzahn in einem Kopfbereich eine derartige Fase und/oder Abrundung aufweisen, dass beim Bewegen des Feststellzahns von der Freigabeposition in die Halteposition eine Ausrichtung eines Freibereichs zum Feststellzahn verbessert ist. Beim Bewegen des Feststellzahns in den Freibereich ist zunächst der Scheibenläufer in eine derartige Position zu bringen, dass ein Freibereich dem Feststellzahn zugeordnet ist. Eine Fase und eine Abrundung haben den Vorteil, dass eine größere Toleranz bei der Anordnung des Freibereichs zum Feststellzahns möglich ist, da aufgrund der Fase bzw. der Abrundung ein leichteres Eintauchen des Feststellzahns in den Freibereich gewährleistet ist. Eine genaue Ausrichtung des Scheibenläufers zum Feststellelement kann durch weiteres Eintauchen des Feststellelements in den Freibereich erfolgen.

Vorzugsweise ist der Feststellzahn zylinderförmig oder quaderförmig ausgebildet. Demnach ist es bevorzugt, dass der Freibereich zylinderförmig oder quaderförmig ausgebildet ist. Unter einer zylinderförmigen bzw. quaderförmigen Ausbildung wird im Rahmen der Erfindung auch eine im Wesentlichen zylinderförmige oder quaderförmige Ausbildung verstanden, wobei der Feststellzahn zusätzliche Abrundungen, Fasen oder dergleichen aufweisen kann. Ein derartiger Feststellzahn ist kostengünstig sowie mit einfachen Mitteln herstellbar und zur Übertragung von Kräften zur Bereitstellung des Haltemoments besonders geeignet.

Es kann weiter vorgesehen sein, dass das Feststellelement um die Schwenkachse verschwenkbar an dem Stator, einem Statorrückschluss und/oder einem Statorgehäuse des Elektroflachmotors angeordnet ist. Die Schwenkachse verläuft vorzugsweise parallel zur Rotationsachse des Scheibenläufers. Ein derartiges Feststellelement ist vorzugsweise klinkenförmig, insbesondere rastklinkenförmig, ausgebildet. Dies hat den Vorteil, dass eine Kraftübertragung zwischen dem Feststellelement und dem Feststellabschnitt zur Bereitstellung des Haltemoments verbesserbar ist, da sich das Feststellelement im Wesentlichen tangential zum Feststellabschnitt erstreckt und somit einer relativ geringen mechanischen Belastung ausgesetzt ist.

Vorzugsweise ist das Aktuatorelement mit einem von der Schwenkachse entfernten Endbereich des Feststellelements mechanisch gekoppelt. Hierfür kann erfindungsgemäß vorgesehen sein, dass sich der Endbereich des Feststellelements in eine Ausnehmung des Aktuatorelements erstreckt, sodass eine Bewegung des Aktuatorelements stets eine Mitnahme des Feststellelements bewirkt. Alternativ kann im Rahmen der Erfindung vorgesehen sein, dass das Aktuatorelement an einer Seite des Endbereichs des Feststellelements derart angeordnet ist. dass mittels des Aktuatorelements das Feststellelement in die Halteposition bewegbar ist und durch eine Bewegung des Aktuatorelements in eine entgegengesetzte Richtung keine Kraft auf das Feststellelement ausübbar ist. Eine Rückstellung des Feststellelements in die Freigabeposition ist in diesem Fall insbesondere mittels der Rückstellvorrichtung möglich. Eine derartige mechanische Kopplung hat den Vorteil, dass das Bewegen des Feststellelements in die Halteposition mit einfachen Mitteln sowie kostengünstig gewährleistet ist.

Es ist bevorzugt, dass die Aktuatorvorrichtung einen Elektromagneten aufweist, wobei das Aktuatorelement mittels des Elektromagneten bewegbar ist. Hierfür weist das Aktuatorelement vorzugsweise einen magnetischen Abschnitt auf, welcher vom Elektromagneten anziehbar ist. Eine derart ausgebildete Aktuatorvorrichtung hat den Vorteil, dass mit einfachen Mitteln sowie auf eine kostengünstige Art und Weise das Aktuatorelement bewegbar ist, nämlich durch Beaufschlagung des Elektromagneten mit elektrischem Strom. Bei einem Stromausfall ist die Aktuatorvorrichtung vorzugsweise lastfrei, sodass eine automatische Rückstellung des Feststellelements mittels der Rückstellvorrichtung sichergestellt ist.

Vorzugsweise ist das Aktuatorelement translatorisch verschiebbar am Elektroflachmotor, insbesondere am Stator, einem Statorrückschluss oder einem Statorgehäuse des Elektroflachmotors, gehalten. Weiter bevorzugt ist das Aktuatorelement derart translatorisch verschiebbar am Elektroflachmotor gehalten, dass eine Bewegungsachse des Aktuatorelements die Rotationsachse des Scheibenläufers schneidet oder diese zumindest annähernd schneidet. Ein Translatorisch verschiebbar ausgebildetes Aktuatorelement hat den Vorteil, dass mit einfachen Mitteln sowie kostengünstig eine Bewegung des Feststellelements mittels der Aktuatorvorrichtung gewährleistbar ist.

Gemäß einem zweiten Aspekt der Erfindung wird die Aufgabe durch eine Sitzverstellungsvorrichtung für einen Fahrzeugsitz, insbesondere eine Rückenlehne, eines Kraftfahrzeugs, gelöst. Die Sitzverstellung weist eine Antriebsvorrichtung zum Versschwenken sowie zum Feststellen einer Lage der Rückenlehne, eine Betätigungsvorrichtung zum Übermitteln einer Anforderung zum Verstellen des bewegbaren Bauteils und eine Steuerungsvorrichtung zum Ansteuern eines Elektroflachmotors der Antriebsvorrichtung zum Bewegen des bewegbaren Bauteils entsprechend der Anforderung auf. Erfindungsgemäß ist die Antriebsvorrichtung als erfindungsgemäße Antriebsvorrichtung ausgebildet.

Der Elektroflachmotor zeichnet sich dadurch aus, dass dieser im Verhältnis zu seiner Breite und Höhe eine relativ geringe Dicke aufweist. Der Elektroflachmotor weist beispielsweise einen plattenförmig bzw. scheibenförmig ausgebildeten Stator sowie einen plattenförmig bzw. scheibenförmig ausgebildeten Scheibenläufer mit zwei entgegengesetzten Hauptseiten auf, wobei der Stator vorzugsweise die Hauptseiten des Scheibenläufers abdeckt bzw. zumindest im Wesentlichen abdeckt. Vorzugsweise weist der Elektroflachmotor ein Gehäuse auf, welches den Scheibenläufer vor äußeren Einflüssen, wie z.B. Feuchtigkeit, Staub oder dergleichen, schützt. Es kann im Rahmen der Erfindung vorgesehen sein, dass der Stator und/oder ein Statorrückschluss des Elektroflachmotors das Gehäuse oder zumindest einen Teil des Gehäuses bildet. Der Scheibenläufer ist um die Rotationsachse rotierbar bzw. drehbar gelagert, um somit ein Drehmoment zum Bewegen eines bewegbaren Bauteils des Kraftfahrzeugs bereitzustellen.

Die Feststellvorrichtung ist zumindest teilweise mit dem Scheibenläufer mechanisch gekoppelt oder mit dem Scheibenläufer zumindest mechanisch koppelbar. Hierfür weist die Feststellvorrichtung das bewegbar gelagerte Feststellelement auf. Das Feststellelement ist zwischen der Halteposition, in welcher ein Drehen des Scheibenläufers blockiert oder zumindest stark behindert ist, und der Freigabeposition, in welcher das Drehen des Scheibenläufers freigegeben ist, bewegbar, beispielsweise linear entlang einer Achse oder durch Verschwenken um eine Schwenkachse. In der Halteposition steht das Feststellelement mit dem Feststellabschnitt des Scheibenläufers mechanisch im Eingriff und blockiert oder behindert somit die Rotation des Scheibenläufers. Unter einer starken Behinderung des Drehens wird im Rahmen der Erfindung verstanden, dass das Haltemoment der Antriebsvorrichtung eine derartige Größe aufweist, dass beim bestimmungsgemäßen Gebrauch der Antriebsvorrichtung dieses nicht überwindbar ist. Dies bedeutet beispielsweise bei einer Sitzverstellung, dass in der Halteposition ein Verstellen des Fahrzeugsitzes durch manuelles Belasten des Fahrzeugsitzes durch den Anwender nicht oder nur unter enormem Kraftaufwand möglich ist.

Die Aktuatorvorrichtung ist zum Bewegen des Feststellelements von der Halteposition in die Freigabeposition ausgebildet. Hierfür weist die Aktuatorvorrichtung das Aktuatorelement auf, welches vorzugsweise mit dem Feststellelement mechanisch gekoppelt oder zumindest mechanisch koppelbar ist. Vorzugsweise ist die Aktuatorvorrichtung mittels eines Arbeitsmediums, insbesondere elektrischen Stroms, betreibbar. Durch Beaufschlagen der Aktuatorvorrichtung mit dem Arbeitsmedium ist das Aktuatorelement derart bewegbar, dass dieses das Feststellelement von der Halteposition in die Freigabeposition bewegt, beispielsweise in die Freigabeposition zieht, drückt oder dergleichen. Zudem ist die Aktuatorvorrichtung vorzugsweise derart ausgebildet, dass bei einem Nicht-Beaufschlagen der Aktuatorvorrichtung mit dem Arbeitsmedium ein Bewegen des Feststellelements in die Halteposition mit relativ geringen Kräften gewährleistet ist. Hierdurch wird gewährleistet, dass ein Rückstellen der Feststellvorrichtung von der Freigabeposition in die Halteposition bei nicht beaufschlagter Aktuatorvorrichtung nicht oder nur geringfügig behindert ist. Im Falle einer Störung der Beaufschlagung mit dem Arbeitsmedium ist somit eine Rückstellung des Feststellelements in die Halteposition stets leicht möglich.

Zum Zurückstellen des Feststellelements von der Freigabeposition in die Halteposition weist die Antriebsvorrichtung die Rückstellvorrichtung auf. Die Rückstellvorrichtung ist vorzugsweise als passives Bauteil ausgebildet. Demnach ist die Rückstellvorrichtung vorzugsweise ausgebildet, durch das Bewegen des Feststellelements von der Halteposition in die Freigabeposition Energie zu speichern und diese gespeicherte Energie wieder abzugeben, wenn die Aktuatorvorrichtung nicht mehr mit dem Arbeitsmedium beaufschlagt wird. Vorzugsweise weist die Rückstellvorrichtung ein Federelement, wie z. B. eine Schraubenfeder, Blattfeder oder dergleichen, auf. Es kann erfindungsgemäß vorgesehen sein, dass die Rückstellvorrichtung als Teil der Aktuatorvorrichtung ausgebildet ist.

Die Betätigungsvorrichtung weist beispielsweise einen Schalter, Taster, Drehknopf oder dergleichen auf. Durch Betätigen der Betätigungsvorrichtung ist das Bewegen des Feststellelements der Feststellvorrichtung mittels der Aktuatorvorrichtung von der Halteposition in die Freigabeposition bewirkbar. Mittels der Betätigungsvorrichtung ist die Anforderung zum Verstellen des bewegbaren Bauteils übermittelbar, insbesondere an die Steuerungsvorrichtung

Die Steuerungsvorrichtung ist vorzugsweise zum Erkennen der Betätigung der Betätigungsvorrichtung, Betätigen der Aktuatorvorrichtung und Betätigen des Elektroflachmotors ausgebildet. Zudem können ein oder mehrere Sensoren zum Detektieren einer Sitzposition des Fahrzeugsitzes vorgesehen sein, insbesondere zum Feststellen, dass eine gewünschte Sitzposition erreicht ist.

Bei der erfindungsgemäßen Sitzverstellungsvorrichtung ergeben sich sämtliche Vorteile, die bereits zu einer Antriebsvorrichtung für den Antrieb bewegbarer Bauteile eines Kraftfahrzeugs gemäß dem ersten Aspekt der Erfindung beschrieben worden sind. Demnach hat die erfindungsgemäße Sitzverstellungsvorrichtung gegenüber herkömmlichen Sitzverstellungsvorrichtungen den Vorteil, dass mit einfachen Mitteln sowie auf eine kostengünstige Art und Weise eine Verstellung des Fahrzeugsitzes, insbesondere einer Rückenlehne gewährleistet ist, wobei die Sitzverstellungsvorrichtung besonders platzsparend ausgebildet ist und einen relativ geringen Verschleiß aufweist. Die Herstellungskosten einer erfindungsgemäßen Sitzverstellungsvorrichtung sind geringer als bei einer bekannten Sitzverstellungsvorrichtung mit einer Antriebsvorrichtung, welche einen Elektromotor sowie ein Getriebe aufweist.

Gemäß einem dritten Aspekt der Erfindung wird die Aufgabe durch ein Verfahren zum Verstellen eines bewegbaren Bauteils eines Kraftfahrzeugs, insbesondere einer Winkelstellung einer Rückenlehne eines Fahrzeugsitzes, gelöst, wobei das Verfahren eine erfindungsgemäße Antriebsvorrichtung verwendet. Das erfindungsgemäße Verfahren weist die folgenden Schritte auf:
- Übermitteln einer Anforderung zum Verstellen des bewegbaren Bauteils mittels einer Betätigungsvorrichtung,
- Bewegen des Feststellelements der Feststellvorrichtung zum Feststellen des Scheibenläufers von der Halteposition in die Freigabeposition mittels der Aktuatorvorrichtung der Feststellvorrichtung,
- Ansteuern des Elektroflachmotors der Antriebsvorrichtung mit dem Stator und dem um eine Rotationsachse rotierbar gelagerten Scheibenläufer zum Bewegen des bewegbaren Bauteils entsprechend der Anforderung mittels einer Steuerungsvorrichtung, und
- Bewegen des Feststellelements der Feststellvorrichtung von der Freigabeposition in die Halteposition mittels der Aktuatorvorrichtung.

Die Anforderung kann beispielsweise durch Drücken eines Tasters, Schalters oder dergleichen oder durch Drehen eines Drehknopfs der Betätigungsvorrichtung erfolgen. Durch das Betätigen kann beispielsweise eine Zielkonfiguration des Fahrzeugsitzes vorgegeben werden. Alternativ ist durch das Betätigen eine Bewegung des Fahrzeugsitzes für die Dauer der Betätigung übermittelbar. Die Aktuatorvorrichtung wird zum Bewegen des Feststellelements vorzugsweise mittels der Steuerungsvorrichtung angesteuert. Ebenso erfolgt das Ansteuern des Elektroflachmotors mittels der Steuerungsvorrichtung, wobei das Ansteuern der Aktuatorvorrichtung vorzugsweise gleichzeitig mit oder zeitversetzt vor dem Ansteuern des Elektroflachmotors erfolgt. Vorzugsweise wird der Elektroflachmotor erst angesteuert, wenn das Feststellelement in der Freigabeposition angeordnet ist. Alternativ kann der Elektroflachmotor bereits beim Bewegen des Feststellelements geringfügig angesteuert werden, um ein unbeabsichtigtes Verstellen des bewegbaren Bauteils zu vermeiden. Auf diese Weise sind ein Überhitzen und/oder eine Beschädigung des Elektroflachmotors vermeidbar.

Der Elektroflachmotor wird mittels der Steuerungsvorrichtung derart angesteuert, dass das bewegbare Bauteil entsprechend der übermittelten Anforderung bewegt wird. Vorzugsweise wird der Elektroflachmotor derart angesteuert, das bewegbare Bauteil nach Erreichen der Wunschposition in dieser zu halten, solange zu halten, bis das Feststellelement von der Freigabeposition wieder zurück in die Halteposition bewegt ist. Auf diese Weise ist ein unbeabsichtigtes Verstellen des bewegbaren Bauteils aus der Wunschposition vermeidbar.

Bei dem erfindungsgemäßen Verfahren ergeben sich sämtliche Vorteile, die bereits zu einer Antriebsvorrichtung für den Antrieb bewegbarer Bauteile eines Kraftfahrzeugs gemäß dem ersten Aspekt der Erfindung sowie zu einer Sitzverstellungsvorrichtung für einen Fahrzeugsitz eines Kraftfahrzeugs gemäß dem zweiten Aspekt der Erfindung beschrieben worden sind. Demnach hat das erfindungsgemäße Verfahren gegenüber herkömmlichen Verfahren den Vorteil, dass mit einfachen Mitteln sowie auf eine kostengünstige Art und Weise eine Bewegung bewegbarer Teile des Kraftfahrzeugs gewährleistet ist, wobei die zur Durchführung des Verfahrens erforderliche Antriebsvorrichtung besonders platzsparend ausgebildet ist und einen relativ geringen Verschleiß aufweist. Die Herstellungskosten einer zur Durchführung des Verfahrens erforderlichen Antriebsvorrichtung sind geringer als bei Antriebsvorrichtungen zur Verwendung bei herkömmlichen Verfahren, nämlich mit einem Elektromotor und einem Getriebe.

Eine erfindungsgemäße Antriebsvorrichtung für den Antrieb bewegbarer Bauteile eines Kraftfahrzeugs, eine erfindungsgemäße Sitzverstellungsvorrichtung für einen Fahrzeugsitz sowie ein Verfahren zum Verstellen eines bewegbaren Bauteils eines Kraftfahrzeugs werden nachfolgend anhand von Zeichnungen näher erläutert. Es zeigen jeweils schematisch:
- Figur 1: in einer Draufsicht eine bevorzugte erste Ausführungsform einer erfindungsgemäßen Antriebsvorrichtung,
- Figur 2: in einer perspektivischen Darstellung die erfindungsgemäße Antriebsvorrichtung aus Figur 1,
- Figur 3: in einer Draufsicht eine bevorzugte zweite Ausführungsform einer erfindungsgemäßen Antriebsvorrichtung,
- Figur 4: in einer Draufsicht eine bevorzugte dritte Ausführungsform einer erfindungsgemäßen Antriebsvorrichtung,
- Figur 5: in einer Draufsicht eine bevorzugte Ausführungsform einer erfindungsgemäßen Sitzverstellungsvorrichtung, und
- Figur 6: in einem Ablaufdiagramm eine bevorzugte Ausführungsform eines erfindungsgemäßen Verfahrens.

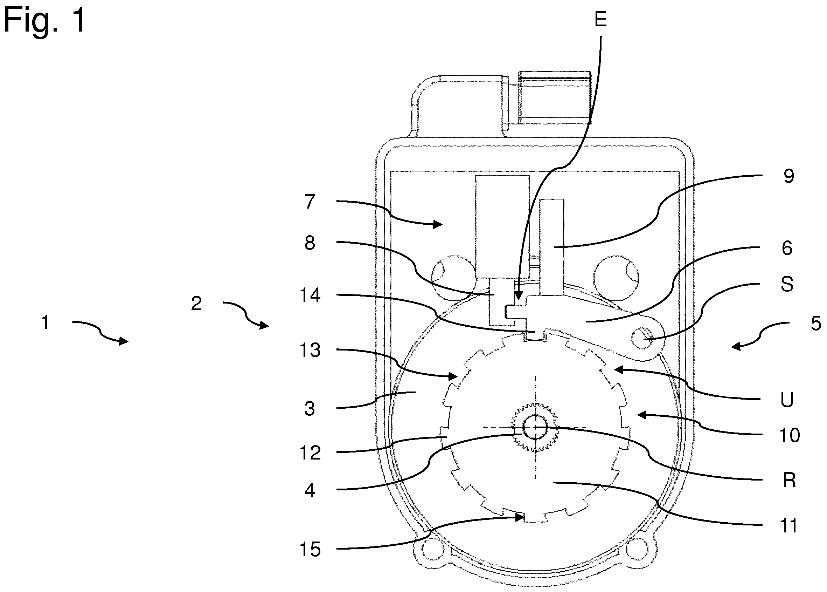

Elemente mit gleicher Funktion und Wirkungsweise sind in den Fig. 1 bis 6 jeweils mit denselben Bezugszeichen versehen.

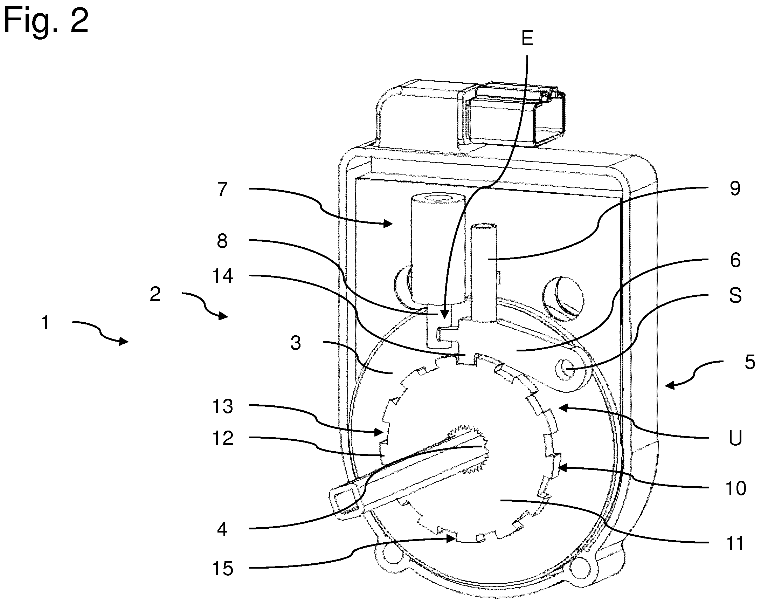

In Fig. 1 ist eine bevorzugte erste Ausführungsform einer erfindungsgemäßen Antriebsvorrichtung 1 schematisch in einer Draufsicht abgebildet. Fig. 2 zeigt die Antriebsvorrichtung 1 in einer perspektivischen Ansicht. Die Antriebsvorrichtung 1 weist einen Elektroflachmotor 2 mit einem Stator 3 und einem um eine Rotationsachse R rotierbar gelagerten Scheibenläufer 4 auf. Ferner weist die Antriebsvorrichtung 1 eine Feststellvorrichtung 5 zum Arretieren des Scheibenläufers 4 auf. Die Feststellvorrichtung 5 weist ein klinkenförmiges, um eine Schwenkachse S verschwenkbar gelagertes Feststellelement 6 mit einem Feststellzahn 14 sowie eine Haltescheibe 11 mit um eine Umfangsfläche U verteilten Haltezähnen 12 auf. Zwischen jeweils zwei Haltezähnen 12 ist ein Freibereich 13 ausgebildet. Einander zugewandte Haltezahnflanken 15 von einen Freibereich 13 definierenden Haltezähnen 12 sind in diesem Beispiel parallel zueinander ausgebildet. In einer Halteposition greift der Feststellzahn 14 in einen Freibereich 13 ein. Somit ist eine Rotation des Scheibenläufers 4 um die Rotationsachse R blockiert. In einer Freigabeposition ist der Feststellzahn 14 außerhalb des Freibereichs 13 angeordnet, sodass eine Rotation des Scheibenläufers 4 um die Rotationsachse R freigegeben ist.

Zum Bewegen des Feststellelements 6 von der Halteposition in die Freigabeposition weist die Antriebsvorrichtung 1 eine Aktuatorvorrichtung 7 mit einem translatorisch bewegbaren Aktuatorelement 8 auf. Das Aktuatorelement 8 ist mit einem Endbereich E des Feststellelements 6 mechanisch gekoppelt, sodass eine translatorische Bewegung des Aktuatorelements 8 eine Schwenkbewegung des Feststellelements 6 um die Schwenkachse S bewirkt. Zum Zurückstellen des Feststellelements 6 von der Freigabeposition in die Halteposition weist die Antriebsvorrichtung 1 eine Rückstellvorrichtung 9 auf, welche beispielsweise eine Feder, insbesondere eine Schraubenfeder, aufweist. Auf diese Weise wird gewährleistet, dass das Feststellelement 6 bei einer inaktiven Aktuatorvorrichtung 7 in der Halteposition angeordnet ist, um eine unbeabsichtigte Rotation des Scheibenläufers 4 zu verhindern.

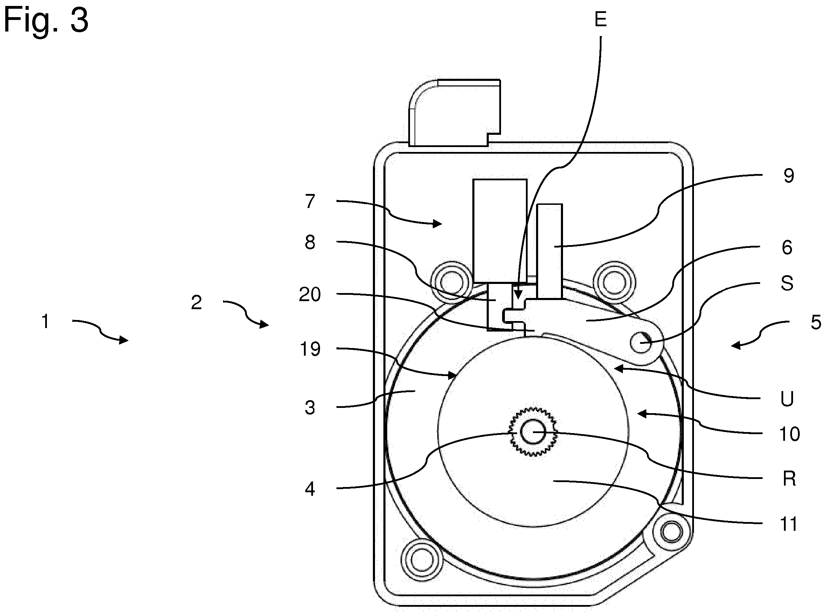

Fig. 3 zeigt eine bevorzugte zweite Ausführungsform einer erfindungsgemäßen Antriebsvorrichtung 1 schematisch in einer Draufsicht. Die in Fig. 3 gezeigte Antriebsvorrichtung 1 unterscheidet sich von der in Fig. 1 und Fig. 2 dargestellten Antriebsvorrichtung 1 in der Ausgestaltung der Feststellvorrichtung 5. Die Feststellvorrichtung 5 weist keine Haltezähne 12, keine Freibereiche 13 und keinen Feststellzahn 14 auf (vgl. Fig. 1). Das Feststellelement 6 weist gemäß der zweiten Ausführungsform einen Reibzahn 20 auf, welcher mittels des Aktuatorelements 8 der Aktuatorvorrichtung 7 gegen eine Reibfläche 19 der Haltescheibe 11 derart drückbar ist, dass eine Rotation der Scheibenläufers 4 reibschlüssig blockierbar bzw. blockiert ist. Der Reibzahn 20 ist etwa an der gleichen Stelle des Feststellelements 6 wie der Feststellzahn 14 gemäß der ersten Ausführungsform angeordnet. In diesem Zustand ist das Feststellelement 6 in der abgebildeten Halteposition angeordnet. Zudem ist das Feststellelement 6 mittels der Rückstellvorrichtung 9 um die Schwenkachse S von der Halteposition in die Freigabeposition verschwenkbar. In der Freigabeposition ist der Reibzahn 20 vorzugsweise von der Reibfläche 19 beabstandet angeordnet, sodass eine Rotation des Scheibenläufers 4 freigegeben ist.

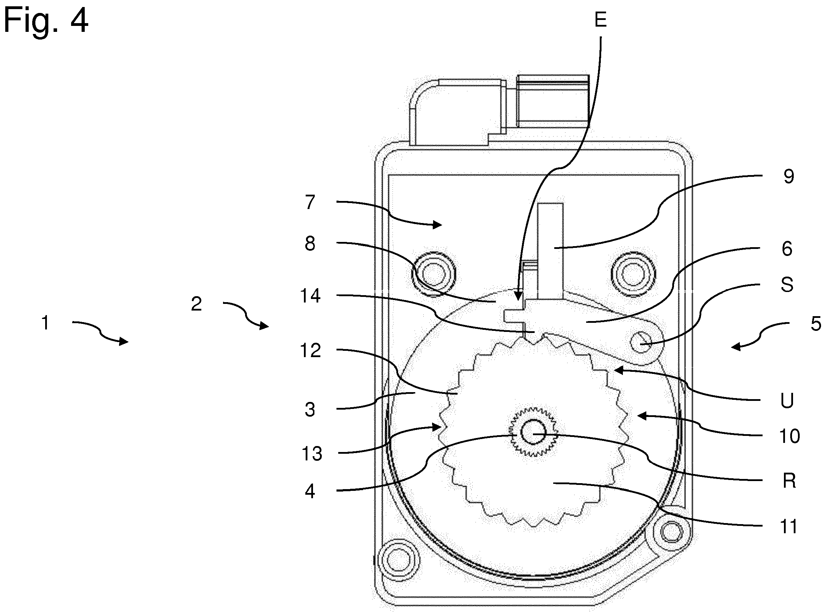

Fig. 4 zeigt eine bevorzugte dritte Ausführungsform einer erfindungsgemäßen Antriebsvorrichtung 1 schematisch in einer Draufsicht. Die in Fig. 4 gezeigte Antriebsvorrichtung 1 unterscheidet sich von der in Fig. 1 bis Fig. 3 dargestellten Antriebsvorrichtung 1 in der Ausgestaltung der Feststellvorrichtung 5. Die Feststellvorrichtung 5 weist gemäß der ersten Ausführungsform Haltezähne 12 auf, welche durch Freiräume 13 voneinander beabstandet an der Haltescheibe angeordnet sind. Die Haltezähne 12 weisen eine dreieckige Grundfläche auf. In diesem Beispiel weisen die Haltezähne 12 die Grundfläche eines gleichschenkligen Dreiecks auf. Alternativ kann die Grundfläche gemäß einer Sperrklinke, trapezförmig oder ähnlich ausgebildet sein. Das Feststellelement 6 weist einen Feststellzahn 14 zum Eingreifen in einen Freiraum 13 auf. Die Haltezähne 12 und der Feststellzahn 14 sind derart ausgebildet, dass durch ein Ansteuern des Scheibenläufers 4 der Feststellzahn 14 aus dem Freiraum 13 herausdrückbar ist. Die Rückstellvorrichtung 9 weist vorzugsweise eine zusätzliche Haltevorrichtung zum Halten des Feststellelements 6 in der Freigabeposition auf.

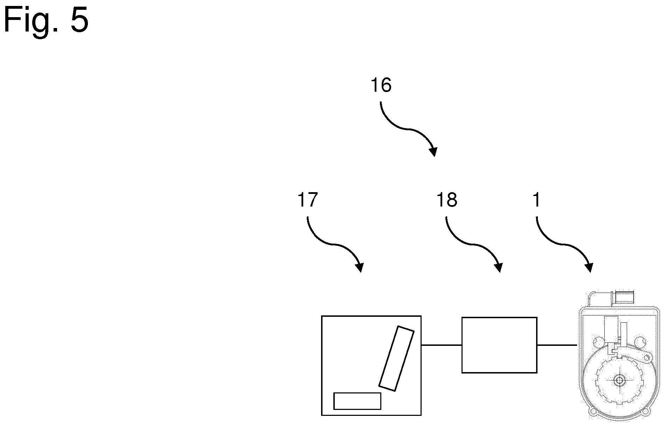

In Fig. 5 ist eine bevorzugte Ausführungsform einer erfindungsgemäßen Sitzverstellungsvorrichtung 16 schematisch in einer Draufsicht abgebildet. Die Sitzverstellungsvorrichtung 16 weist eine erfindungsgemäße Antriebsvorrichtung 1 zum Verstellen des bewegbaren Bauteils, insbesondere einer Rückenlehne eines Fahrzeugsitzes eines Kraftfahrzeugs, auf. Ferner weist die Sitzverstellungsvorrichtung 16 eine Betätigungsvorrichtung 17 zum Übermitteln einer Anforderung zum Verstellen des bewegbaren Bauteils des Kraftfahrzeugs auf. Schließlich weist die Sitzverstellungsvorrichtung 16 eine Steuerungsvorrichtung 18 zum Ansteuern eines Elektroflachmotors 2 (vgl. Fig. 1) der Antriebsvorrichtung 1 zum Bewegen des bewegbaren Bauteils entsprechend der übermittelten Anforderung auf.

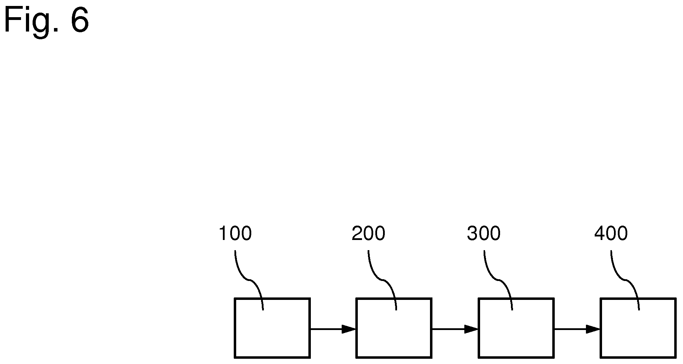

Fig. 6 zeigt eine bevorzugte Ausführungsform eines erfindungsgemäßen Verfahrens schematisch in einem Ablaufdiagramm. In einem ersten Verfahrensschritt 100 wird mittels einer Betätigungsvorrichtung 17 eine Anforderung zum Verstellen eines bewegbaren Bauteils, insbesondere einer Rückenlehne eines Fahrzeugsitzes, eines Kraftfahrzeugs übermittelt, insbesondere an eine Steuerungsvorrichtung 18. In einem zweiten Verfahrensschritt 200 wird mittels einer Aktuatorvorrichtung 7 der Feststellvorrichtung 5 ein Feststellelement 6 der Feststellvorrichtung 5 zum Feststellen des Scheibenläufers 4 von einer Halteposition in eine Freigabeposition bewegt. In einem dritten Verfahrensschritt 300 wird mittels einer Steuerungsvorrichtung 18 ein Elektroflachmotor 2 einer Antriebsvorrichtung 1 zum Bewegen des bewegbaren Bauteils entsprechend der Anforderung angesteuert. Die Antriebsvorrichtung 1 weist einen Stator 3 und einen um eine Rotationsachse R rotierbar gelagerten Scheibenläufer 4 auf. In einem vierten Verfahrensschritt 400 wird mittels der Aktuatorvorrichtung 7 das Feststellelement 6 der Feststellvorrichtung 5 von der Freigabeposition in die Halteposition bewegt. Eine Rotation des Scheibenläufers 4 ist in der Halteposition blockiert.

### Bezugszeichenliste

- 1: Antriebsvorrichtung
- 2: Elektroflachmotor
- 3: Stator
- 4: Scheibenläufer
- 5: Feststellvorrichtung
- 6: Feststellelement
- 7: Aktuatorvorrichtung
- 8: Aktuatorelement
- 9: Rückstellvorrichtung
- 10: Feststellabschnitt
- 11: Haltescheibe
- 12: Haltezahn
- 13: Freibereich
- 14: Feststellzahn
- 15: Haltezahnflanke
- 16: Sitzverstellungsvorrichtung
- 17: Betätigungsvorrichtung
- 18: Steuerungsvorrichtung
- 19: Reibfläche
- 20: Reibzahn

- E: Endbereich
- R: Rotationsachse
- S: Schwenkachse
- U: Umfangsfläche

## Patentansprüche

1. Antriebsvorrichtung (1) für den Antrieb bewegbarer Bauteile eines Kraftfahrzeugs, aufweisend einen Elektroflachmotor (2) mit einem Stator (3) und einem um eine Rotationsachse (R) rotierbar gelagerten Scheibenläufer (4), wobei die Antriebsvorrichtung (1) eine zum Feststellen des Scheibenläufers (4) ausgebildete Feststellvorrichtung (5) aufweist, wobei die Feststellvorrichtung (5) ein zwischen einer Halteposition und einer Freigabeposition bewegbar gelagertes Feststellelement (6), eine betätigbare Aktuatorvorrichtung (7) mit einem bewegbar gelagerten Aktuatorelement (8) zum Bewegen des Feststellelements (6) von der Halteposition in die Freigabeposition und eine Rückstellvorrichtung (9) zum Zurückstellen des Feststellelements (6) von der Freigabeposition in die Halteposition aufweist, wobei das Feststellelement (6) in der Halteposition mit einem Feststellabschnitt (10) des Scheibenläufers (4) mechanisch im Eingriff steht,
**dadurch gekennzeichnet,**
**dass** das Feststellelement (6) um eine Schwenkachse (S) verschwenkbar an dem Elektroflachmotor (2) angeordnet ist und
**dass** der Feststellabschnitt (10) an einer rotationsfest am Scheibenläufer (4) gehaltenen Haltescheibe (11) ausgebildet ist, und
**dass** die Rückstellvorrichtung (9) zwischen der Schwenkachse (S) und der Aktuatorvorrichtung (7) angeordnet ist.

2. Antriebsvorrichtung (1) nach Anspruch 1,
**dadurch gekennzeichnet,**
**dass** der Feststellabschnitt (10) an einer Umfangsfläche (U) der Haltescheibe (11) ausgebildet ist.

3. Antriebsvorrichtung (1) nach wenigstens einem der vorangegangenen Ansprüche,
**dadurch gekennzeichnet,**
**dass** der Feststellabschnitt (10) und das Feststellelement (6) jeweils eine Reibfläche (19) aufweisen.

4. Antriebsvorrichtung (1) nach einem der Ansprüche 1 bis 2,
**dadurch gekennzeichnet,**
**dass** der Feststellabschnitt (10) eine Verzahnung mit einer Mehrzahl von Haltezähnen (12) aufweist, wobei zwischen zwei benachbarten Haltezähnen (12) ein Freibereich (13) ausgebildet ist, und wobei das Feststellelement (6) einen Feststellzahn (14) aufweist, wobei der Feststellzahn (14) ausgebildet ist, in der Halteposition in den Freibereich (13) einzugreifen.

5. Antriebsvorrichtung (1) nach Anspruch 4,
**dadurch gekennzeichnet,**
**dass** die Haltezähne (12) mit dem Feststellzahn (14) in Eingriff bringbare Haltezahnflanken (15) aufweisen, wobei sich benachbarte Haltezahnflanken (15) benachbarter Haltezähne (12) parallel oder zumindest im Wesentlichen parallel zueinander erstrecken.

6. Antriebsvorrichtung (1) nach Anspruch 4 oder 5,
**dadurch gekennzeichnet,**
**dass** die Haltezähne (12) und/oder der Feststellzahn (14) in einem Kopfbereich eine derartige Fase und/oder Abrundung aufweisen, dass beim Bewegen des Feststellzahns (14) von der Freigabeposition in die Halteposition eine Ausrichtung eines Freibereichs (13) zum Feststellzahn (14) verbessert ist.

7. Antriebsvorrichtung (1) nach wenigstens einem der Ansprüche 4 bis 6,
**dadurch gekennzeichnet,**
**dass** der Feststellzahn (14) zylinderförmig oder quaderförmig ausgebildet ist.

8. Antriebsvorrichtung (1) nach wenigstens einem der vorangegangenen Ansprüche,
**dadurch gekennzeichnet,**
**dass** das Feststellelement (6) um die Schwenkachse (S) verschwenkbar an dem Stator (3), einem Statorrückschluss und/oder einem Statorgehäuse des Elektroflachmotors (2) angeordnet ist.

9. Antriebsvorrichtung (1) nach wenigstens einem der vorangegangenen Ansprüche,
**dadurch gekennzeichnet,**
**dass** das Aktuatorelement (8) mit einem von der Schwenkachse (S) entfernten Endbereich (E) des Feststellelements (6) mechanisch gekoppelt ist.

10. Antriebsvorrichtung (1) nach wenigstens einem der vorangegangenen Ansprüche,
**dadurch gekennzeichnet,**
**dass** die Aktuatorvorrichtung (7) einen Elektromagneten aufweist, wobei das Aktuatorelement (8) mittels des Elektromagneten bewegbar ist.

11. Antriebsvorrichtung (1) nach wenigstens einem der vorangegangenen Ansprüche,
**dadurch gekennzeichnet,**
**dass** das Aktuatorelement (8) translatorisch verschiebbar am Elektroflachmotor (2), insbesondere am Stator (3), einem Statorrückschluss oder einem Statorgehäuse des Elektroflachmotors (2), gehalten ist.

12. Sitzverstellungsvorrichtung (16) für einen Fahrzeugsitz, insbesondere eine Rückenlehne, eines Kraftfahrzeugs, aufweisend eine Antriebsvorrichtung (1) zum Verschwenken sowie zum Feststellen einer Lage der Rückenlehne, eine Betätigungsvorrichtung (17) zum Übermitteln einer Anforderung zum Verstellen des bewegbaren Bauteils und eine Steuerungsvorrichtung (18) zum Ansteuern eines Elektroflachmotors (2) der Antriebsvorrichtung (1) zum Bewegen des bewegbaren Bauteils entsprechend der Anforderung,
**dadurch gekennzeichnet,**
**dass** die Antriebsvorrichtung (1) als Antriebsvorrichtung (1) nach einem der vorangegangenen Ansprüche ausgebildet ist.

13. Verfahren zum Verstellen eines bewegbaren Bauteils eines Kraftfahrzeugs, insbesondere einer Winkelstellung einer Rückenlehne eines Fahrzeugsitzes, wobei das Verfahren eine Antriebsvorrichtung mit den Merkmalen eines der Ansprüche 1 bis 11 verwendet, und wobei das Verfahren die folgenden Schritte aufweist:
- Übermitteln einer Anforderung zum Verstellen des bewegbaren Bauteils mittels einer Betätigungsvorrichtung (17),
- Bewegen des Feststellelements (6) der Feststellvorrichtung (5) zum Feststellen des Scheibenläufers (4) von der Halteposition in die Freigabeposition mittels der Aktuatorvorrichtung (7) der Feststellvorrichtung (5),
- Ansteuern des Elektroflachmotors (2) der Antriebsvorrichtung (1) mit dem Stator (3) und dem um eine Rotationsachse (R) rotierbar gelagerten Scheibenläufer (4) zum Bewegen des bewegbaren Bauteils entsprechend der Anforderung mittels einer Steuerungsvorrichtung (18), und
- Bewegen des Feststellelements (6) der Feststellvorrichtung (5) von der Freigabeposition in die Halteposition mittels der Aktuatorvorrichtung (7).

## Claims

1. Drive device (1) for driving movable components of a motor vehicle, comprising a flat electric motor (2) with a stator (3) and a disc rotor (4) mounted so as to be rotatable about an axis of rotation (R), wherein the drive device (1) comprises a fixing device (5) designed to fix in place the disc rotor (4), wherein the fixing device (5) has a fixing element (6) which is mounted so as to be movable between a retaining position and a release position, an actuatable actuator device (7) with a movably mounted actuator element (8) for moving the fixing element (6) from the retaining position to the release position and a reset device (9) for resetting the fixing element (6) from the release position to the retaining position, wherein, in the retaining position, the fixing element (6) is mechanically engaged with a fixing section (10) of the disc rotor (4),
**characterised in that**
the fixing element (6) is arranged on the flat electric motor (2) so as to swivel around a swivel axis (S) and
that the fixing section (10) is formed on a retaining disc (11) held non-rotatably on the disc rotor (4), and
that the reset device (9) is arranged between the swivel axis (S) and the actuator device (7).

2. Drive device (1) according to claim 1,
**characterised in that**
the fixing section (10) is formed on a circumferential surface (U) of the retaining disc (11).

3. Drive device (1) according to at least one of the preceding claims,
**characterised in that**
the fixing section (10) and the fixing element (6) each have a friction surface (19).

4. Drive device (1) according to one of the claims 1 to 2,
**characterised in that**
the fixing section (10) has gears with a plurality of retaining teeth (12), wherein a free region (13) is formed between two adjacent retaining teeth (12), and wherein the fixing element (6) has a fixing tooth (14), wherein the fixing tooth (14) is designed to engage in the free region (13) in the retaining position.

5. Drive device (1) according to claim 4,
**characterised in that**
the retaining teeth (12) have retaining tooth flanks (15) that can be brought to engage with the fixing tooth (14), wherein adjacent retaining tooth flanks (15) of adjacent retaining teeth (12) extend parallel or at least substantially parallel to each other.

6. Drive device (1) according to claim 4 or 5,
**characterised in that**
the retaining teeth (12) and/or the fixing tooth (14) have, in a head region, a chamfer and/or rounding such that when the fixing tooth (14) is moved from the release position to the retaining position, an alignment of a free region (13) to the fixing tooth (14) is improved.

7. Drive device (1) according to at least one of the claims 4 to 6,
**characterised in that**
the fixing tooth (14) is cylindrical or cuboid in shape.

8. Drive device (1) according to at least one of the preceding claims,
**characterised in that**
the fixing element (6) is arranged, so as to swivel around the swivel axis (S), on the stator (3), a stator yoke and/or a stator housing of the flat electric motor (2).

9. Drive device (1) according to at least one of the preceding claims,
**characterised in that**
the actuator element (8) is mechanically coupled to an end region (E) of the fixing element (6) distant from the swivel axis (S).

10. Drive device (1) according to at least one of the preceding claims,
**characterised in that**
the actuator device (7) has an electromagnet, wherein the actuator element (8) is movable by means of the electromagnet.

11. Drive device (1) according to at least one of the preceding claims,
**characterised in that**
the actuator element (8) is held in a translationally movable manner on the flat electric motor (2), in particular on the stator (3), a stator yoke or a stator housing of the flat electric motor (2).

12. Seat adjustment device (16) for a vehicle seat, in particular a backrest, of a motor vehicle, comprising a drive device (1) for pivoting as well as for fixing a position of the backrest, an actuation device (17) for transmitting a request for adjustment of the movable component and a control device (18) for controlling a flat electric motor (2) of the drive device (1) in order to move the movable component in accordance with the request,
**characterised in that**
the drive device (1) is designed as a drive device (1) according to one of the preceding claims.

13. Method for adjusting a movable component of a motor vehicle, in particular an angular position of a backrest of a vehicle seat, wherein the method uses a drive device having the features of one of the claims 1 to 11, and wherein the method comprises the following steps:
- transmitting a request for adjustment of the movable component by means of an actuation device (17),
- moving the fixing element (6) of the fixing device (5) in order to fix the disc rotor (4) from the retaining position into the release position by means of the actuator device (7) of the fixing device (5),
- controlling the flat electric motor (2) of the drive device (1) with the stator (3) and the disc rotor (4), mounted so as to be rotatable about an axis of rotation (R), in order to move the movable component in accordance with the request by means of a control device (18), and
- moving the fixing element (6) of the fixing device (5) from the release position to the retaining position by means of the actuator device (7).

## Revendications

1. Dispositif d'entraînement (1) destiné à entraîner des éléments mobiles d'un véhicule automobile, comprenant un moteur électrique plat (2) muni d'un stator (3) et d'un rotor à disque (4) monté de manière à pouvoir tourner autour d'un axe de rotation (R), le dispositif d'entraînement (1) comportant un dispositif de blocage (5) conçu pour bloquer le rotor à disque (4), le dispositif de blocage (5) comportant un élément de blocage (6) monté de manière à pouvoir se déplacer entre une position de retenue et une position de libération, un dispositif d'actionnement (7) pouvant être actionné, comportant un élément d'actionnement (8) monté de manière mobile pour déplacer l'élément de blocage (6) de la position de retenue à la position de libération, et un dispositif de rappel (9) pour ramener l'élément de blocage (6) de la position de libération à la position de retenue, l'élément de blocage (6) étant en prise mécanique, dans la position de retenue, avec une partie de blocage (10) du rotor à disque (4),
**caractérisé en ce que**
l'élément de blocage (6) est monté de manière pivotante autour d'un axe de pivotement (S) sur le moteur électrique plat (2) et
la partie de blocage (10) est formée sur un disque de retenue (11) maintenu de manière solidaire en rotation sur le rotor à disque (4), et
le dispositif de rappel (9) est disposé entre l'axe de pivotement (S) et le dispositif d'actionnement (7).

2. Dispositif d'entraînement (1) selon la revendication 1,
**caractérisé en ce que**
la partie de blocage (10) est formée sur une surface périphérique (U) du disque de retenue (11).

3. Dispositif d'entraînement (1) selon au moins l'une des revendications précédentes,
**caractérisé en ce que**
la partie de blocage (10) et l'élément de blocage (6) comportent chacun une surface de friction (19).

4. Dispositif d'entraînement (1) selon l'une des revendications 1 à 2,
**caractérisé en ce que**
la partie de blocage (10) comporte une denture comprenant une pluralité de dents de retenue (12), une zone libre (13) étant formée entre deux dents de retenue (12) adjacentes, et l'élément de blocage (6) comportant une dent de blocage (14), laquelle est conçue pour s'engager dans la zone libre (13) en position de retenue.

5. Dispositif d'entraînement (1) selon la revendication 4,
**caractérisé en ce que**
les dents de retenue (12) présentent des flancs de dent de retenue (15) pouvant s'engager avec la dent de blocage (14), les flancs de dent de retenue (15) adjacents de dents de retenue (12) adjacentes s'étendant parallèlement ou au moins sensiblement parallèlement les uns aux autres.

6. Dispositif d'entraînement (1) selon la revendication 4 ou 5,
**caractérisé en ce que**
les dents de retenue (12) et/ou la dent de blocage (14) présentent, dans une zone de tête, un chanfrein et/ou un arrondi tels que, lors du déplacement de la dent de blocage (14) de la position de libération vers la position de retenue, l'alignement d'une zone libre (13) par rapport à la dent de blocage (14) est amélioré.

7. Dispositif d'entraînement (1) selon au moins l'une des revendications 4 à 6,
**caractérisé en ce que**
la dent de blocage (14) est de forme cylindrique ou parallélépipédique.

8. Dispositif d'entraînement (1) selon au moins l'une des revendications précédentes,
**caractérisé en ce que**
l'élément de blocage (6) est monté de manière à pouvoir pivoter autour de l'axe de pivotement (S) sur le stator (3), un élément de retour du circuit magnétique du stator et/ou un boîtier de stator du moteur électrique plat (2).

9. Dispositif d'entraînement (1) selon au moins l'une des revendications précédentes,
**caractérisé en ce que**
l'élément d'actionnement (8) est couplé mécaniquement à une zone d'extrémité (E) de l'élément de blocage (6) située à distance de l'axe de pivotement (S).

10. Dispositif d'entraînement (1) selon au moins l'une des revendications précédentes,
**caractérisé en ce que**
le dispositif d'actionnement (7) comprend un électroaimant, l'élément d'actionnement (8) pouvant être déplacé au moyen de cet électroaimant.

11. Dispositif d'entraînement (1) selon au moins l'une des revendications précédentes,
**caractérisé en ce que**
l'élément d'actionnement (8) est monté de manière à pouvoir se déplacer en translation sur le moteur électrique plat (2), en particulier sur le stator (3), un élément de retour du circuit magnétique du stator ou un boîtier de stator du moteur électrique plat (2).

12. Dispositif de réglage de siège (16) pour un siège de véhicule, en particulier un dossier, d'un véhicule automobile, comprenant un dispositif d'entraînement (1) destiné à faire pivoter et à bloquer une position du dossier, un dispositif d'actionnement (17) destiné à transmettre une demande de réglage de l'élément mobile et un dispositif de commande (18) destiné à commander un moteur électrique plat (2) du dispositif d'entraînement (1) pour déplacer l'élément mobile conformément à la demande,
**caractérisé en ce que**
le dispositif d'entraînement (1) est conçu comme un dispositif d'entraînement (1) selon l'une des revendications précédentes.

13. Procédé de réglage d'un élément mobile d'un véhicule automobile, en particulier d'une position angulaire d'un dossier d'un siège de véhicule, le procédé utilisant un dispositif d'entraînement présentant les caractéristiques de l'une des revendications 1 à 11, et le procédé comprenant les étapes suivantes :
- transmission d'une demande de réglage de l'élément mobile au moyen d'un dispositif d'actionnement (17),
- déplacement de l'élément de blocage (6) du dispositif de blocage (5) destiné à bloquer le rotor à disque (4) de la position de retenue vers la position de libération au moyen du dispositif d'actionnement (7) du dispositif de blocage (5),
- commander le moteur électrique plat (2) du dispositif d'entraînement (1), comprenant le stator (3) et le rotor à disque (4) monté de manière à pouvoir tourner autour d'un axe de rotation (R), pour déplacer l'élément mobile conformément à la demande au moyen d'un dispositif de commande (18), et
- déplacement de l'élément de blocage (6) du dispositif de blocage (5) de la position de libération vers la position de retenue au moyen du dispositif d'actionnement (7).
